# EUROPEAN PATENT SPECIFICATION

(11) **EP 1 061 809 B1**
(45) Date of publication and mention of the grant of the patent: **31.01.2007**
(21) Application number: 99909413.9
(22) Date of filing: 08.03.1999
(51) Int. Cl.: A22C 29/02

(54) **A DEVICE AND A METHOD FOR PEELING SHRIMPS**
VERFAHREN UND VORRICHTUNG ZUM SCHÄLEN VON GARNELEN
DISPOSITIF ET PROCEDE PERMETTANT DE DECORTIQUER DES CREVETTES

(30) Priority: 09.03.1998 NL 1008537
(43) Date of publication of application: 27.12.2000
(73) Proprietor: MEGAPEL B.V., NL-2014 AE Haarlem (NL)
(72) Inventor: VAN WOENSEL, Ilja, NL-2014 AE Haarlem (NL); DE VRIES, Jacobus, Lambertus, NL-2014 AE Haarlem (NL)
(74) Representative: Vernout, Robert
(86) International application number: PCT/NL1999/000125
(87) International publication number: WO 1999/045785

(56) References cited:
- DE-C- 360 290
- US-A- 2 301 729
- US-A- 4 439 893
- US-A- 4 616 382

## Description

The invention relates to improvements of a shrimp peeling machine as described in great detail in US-A-4, 616, 382. The present description will refer to the contents of the said patent specification, so that said contents need not be repeated herein.

The term shrimps used herein is meant to include other, similar crustaceans as well.

The object of the invention is to improve the efficiency and reliability of the device and the method for peeling shrimps, and furthermore to improve the quality of the peeled shrimps.

With the method for peeling shrimps wherein a shrimp is clamped against a supporting surface with its backside (shell) by two clamping elements which engage the shrimp on either side of its belly side, near the edge of the shell, after which the tail portion of the shell is engaged and pulled off, the shell is preferably pulled open, after which the shell is allowed to spring back again, before said tail portion is pulled off. In practice it has become apparent that this method is highly conducive to achieving a correct engagement and pulling off of the tail portion of the shell.

In order to explain the invention more fully, a number of embodiments of parts of a device for peeling shrimps will be described hereafter with respect to the drawing.
Figure 1 is a side view of a disc-shaped peeling element;
Figure 2 is a side view of a disc-shaped peeling element of different construction;
Figures 3, 4, 5 and 6 show parts of a peeling element to be connected together;
Figures 7 and 8 show a clamping element;
Figures 9 and 10 show a roller element;
Figure 11 shows a shrimp present on a supporting surface;
Figures 12 - 15 show a stop member;
Figures 16 and 17 show means for stretching the tail of a shrimp;
Figures 18 and 19 show the positioning of a shrimp; and
Figures 20 - 23 show a pivoted vibrating chute.

The figures are merely schematic representations, with corresponding parts being indicated by the same numerals in the various figures.

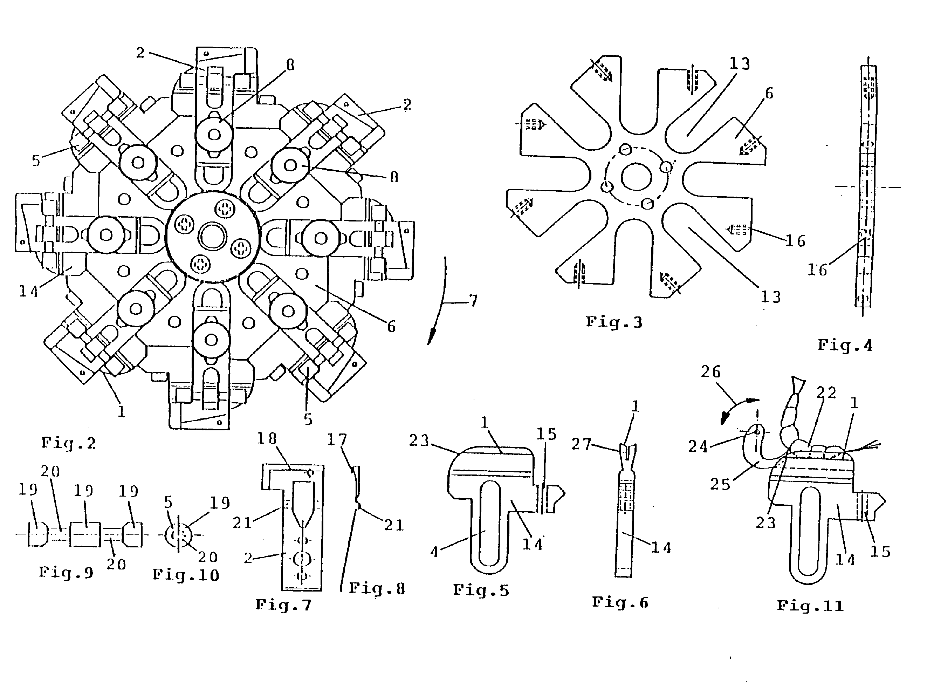

Figure 1 corresponds in large measure to Figure 14g of US-A-4,616,382. Figure 1 shows in side view a disc-shaped peeling element comprising eight supporting elements 1, which are provided on the edge of said disc-shaped peeling element and which are substantially flat. A clamping element 2 is present on either side of each supporting surface 1, which clamping elements are arranged in pairs, one pair behind the other, seen in Figure 1. The two clamping elements 2 present on either side of supporting surface 1 are interconnected by means of bolts 3, which extend through a recess (indicated by dotted line 4) in the disc-shaped peeling element.

Each pair of clamping elements 1 thus formed is capable of movement in radial direction, wherein a roller element 5 rolls over the lateral surface of disc 6. As a result of the presence of a profile on said lateral surface, the clamping elements move towards and away from each other not only in radial direction, but also in axial direction.

The peeling element rotates in the direction indicated by arrow 7. The radial movement of the clamping elements takes place in that each pair of clamping elements 2 is provided with a circular cam follower 8, which can mate with a stationary camway 9. Camway 9 comprises an external part 10 and an internal part 11. External part 10 moves the clamping elements 1 radially inwards and internal part 11 moves the clamping elements 2 radially outwards. clamping elements 2 press roller elements 5 against the side of disc 6, so that the clamping elements 2 of each pair of clamping elements will be positioned most closely together in the position of rest and move apart upon being moved outwards or inwards from said position, at least at the location of their radially outwardly extending ends.

The peeling element according to Figure 1 differs from the version which is shown in US-A-4,616,382 in that the external part 10 of camway 9 is provided with a protrusions 12, as a result of which the clamping elements will pull the shell of the shrimp slightly open for a short time upon passing said protrusion 12. Said pulling open takes place before the tail portion is removed from the shell, and it has appeared to greatly facilitate the pulling off of the tail portion.

Figure 2 shows a disc-shaped peeling element comprising a number of detachable parts 14, which are each provided with a supporting surface 1 and with clamping elements 2. Figure 2 shows the other side of the peeling element of Figure 1, so that the peeling element according to Figure 2 turns clockwise, as is indicated by arrow 7.

The peeling element according to Figure 2 is built up of a disc-shaped member 6 (Figure 3), which is provided with recesses 13, in which the detachable part 14 (Figure 5) fits. Detachable part 14 can be secured in disc 6 by means of a bolt which extends through hole 15 and which can be screwed into hole 16. Detachable part 14 can be mounted and removed without any difficulty in this manner.

Figure 4 shows disc 6 in front view.

Figure 5 is a side view of detachable part 14, and Figure 6 is a front view thereof. A clamping element 2 may be provided on either side of detachable part 14, which clamping element is shown in Figures 7 and 8. The two clamping elements, which can be jointly provided on detachable part 14, are essentially each other's mirror image, the clamping element 2 which is shown in Figures 7 and 8 is present on the front side of the peeling element according to Figure 2 or of the detachable part 14 according to Figure 5, with Figure 7 showing the inside of clamping element 2. The edge 17 by means of which the shrimp is engaged on the belly side near the edge of the shell comprises a part 18 which is serrated (Figure 7).

Roller element 5 is shown in Figures 9 and 10. It consists of three cylindrical roller surfaces 19, which are interconnected by parts 20 having a smaller diameter. Said parts 20 fit in the correspondingly shaped parts 21 of clamping element 2 (Figure 8).

Figure 11 shows a detachable part 14, similar to the one which is shown in Figure 5. A shrimp 22 is present on supporting surface 1, which shrimp is clamped against supporting surface 1 by clamping elements 2 (not shown). On the side where the tail of shrimp 22 is present (the left-hand side in Figure 11), said supporting surface comprises a convex portion 23, so that there is a possibility of the back of shrimp 22 being bent to a slightly concave shape when the tail is being stretched.

Furthermore, a knife 25 capable of pivoting movement about a pivot pin 24 is present, which knife can be pivoted in the direction indicated by arrow 25 in such a manner that the tip of knife 25 will pierce the shell of shrimp 22, and that near the place where the tail portion of the shell is to be separated from the body portion of the shell. During the pivoting movement of knife 25, the tip of knife 25 passes through a groove 27 which is tangentially formed in the disc (Figure 6). After making a cut in the shell of shrimp 22, knife 25 will swing aside and move to a position outside the path followed by the shrimps.

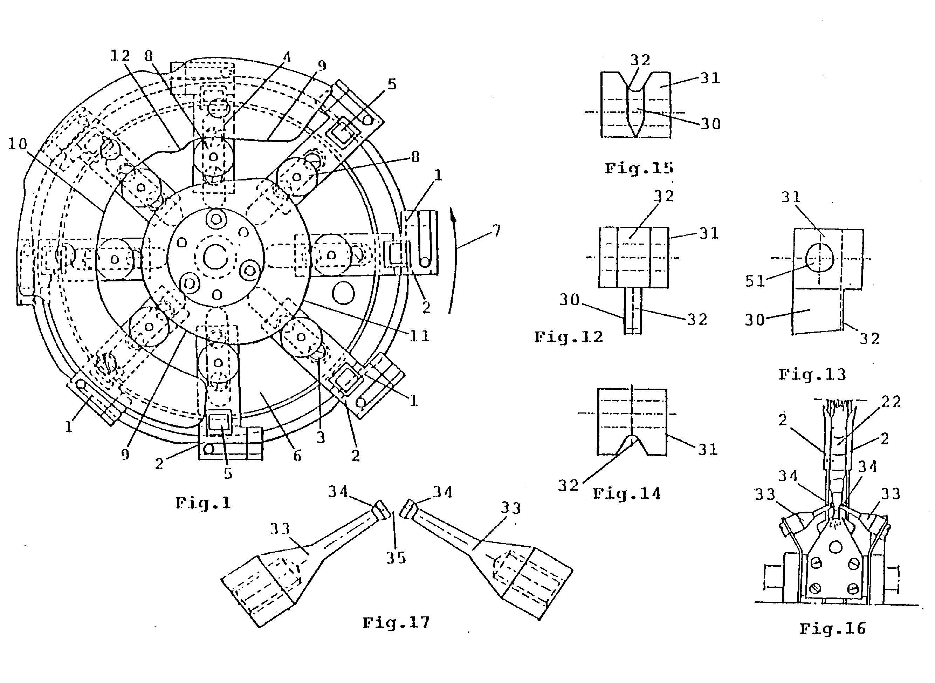

Figures 12 - 15 show a stop member, which performs the same function as the stop member which is shown in Figure 15d of US-A-4,616,382. Unlike the known stop member, the stop member according to Figures 12 - 15 comprises a narrow portion 30 and a wider portion 31. Stop member 30, 31 is positioned a fixed distance away from the axis about which the peeling element rotates, and it occupies a fixed position relative to said axis, that is, it does not swing aside each time as does the aforesaid known stop member. Narrow portion 30 is so formed that it can move between clamping elements 2, whilst wide portion 31 remains outside the reach of clamping elements 2 in radial direction. Stop member 30, 31 is provided on its front side (Figure 12) with a concave stop surface 32, both in narrow portion 30 and in wide portion 31. The shrimp can rest against said stop member upon being placed on supporting surface 1, and subsequently it can be held in a stationary position relative to the rotating peeling element. The stop member can be held in a stationary position with respect to the rotating peeling element for some time during these operations. Stop member 30, 31 thereby rotates about the same axis as does the peeling element. The stop member is provided with a bore 51, through which a bolt can extend so as to secure the stop member.

Figure 16 largely corresponds to Figure 15c of US-A-4,616,382, with conical bars 110, 111 being replaced by bar-shaped members 33. Said bar-shaped members 33 comprise a widened portion 34 near their ends, so that the edge against which the tail portion of shrimp 22 slides is formed with an interruption, whereby the edge portions on either side of said interruption are more in line than is the case with the aforesaid conical bar-shaped members.

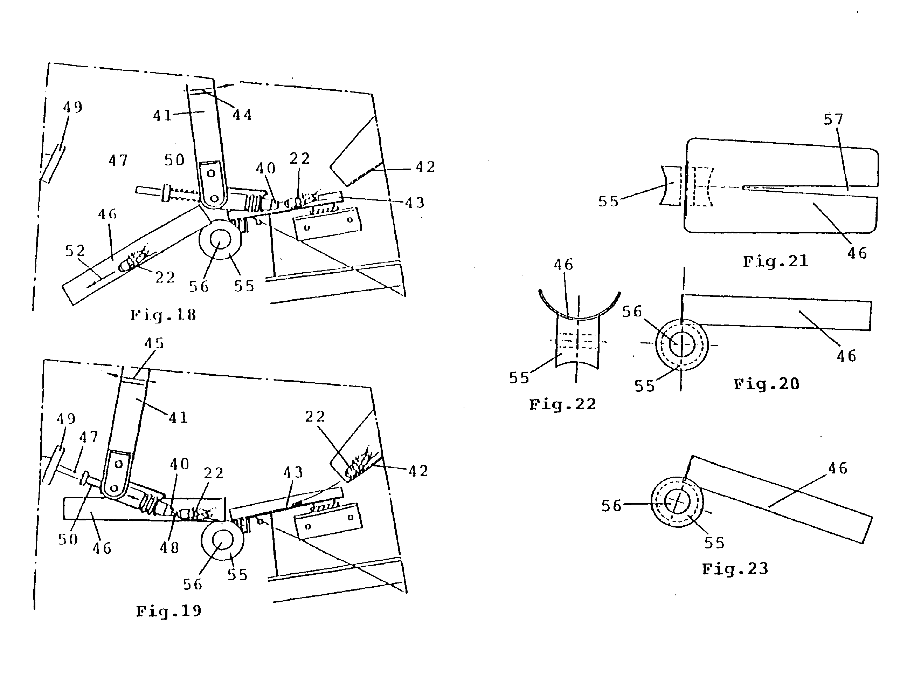

Figures 18 and 19 show a suction nozzle 40 which is mounted on a pivoted arm 41. Shrimps 22 are supplied via a feed chute 42, which shrimps will be positioned with their backs forward in chute 43. Figure 18 shows how suction nozzle 40 moves to the right (arrow 44) and engages shrimp 22 by sucking away air when suction nozzle 7 comes into contact with shrimp 22. Suction nozzle 40 then pivots to the left (arrow 45, Figure 19) and carries shrimp 22 along to a chute 46, in which shrimp 22 is deposited at a precisely determined location. Suction nozzle 40 is to that end provided with a bar 47, whose end 48 can move outwards through suction nozzle 40 when the other end of bar 47 rests against a stationary stop 49. Bar 47 is thereby pushed outwards through the opening of nozzle 40 against the pressure of coil spring 50 to form a precise stop for shrimp 22, so that said shrimp will be positioned at an exactly determined location.

An additional advantage of the use of bar 47 is that suction nozzle 40 is closed automatically when shrimp 22 has reached its position.

Once shrimp 22 has reached its position in chute 46, chute 46 will pivot obliquely downwards about pivot pin 56, as is shown in Figure 18. In this position of chute 46, said chute is vibrated by a vibrating mechanism (not shown), which engages pivot pin 56. The vibration of chute 46 not only makes for a steady movement of shrimp 22 in the direction indicated by arrow 52, but it also results in the heavier body portion of the shrimp being positioned deeper in the chute than the tail portion.

Figures 20 - 23 show chute 46. As appears from Figure 22, chute 46 has a circular arc cross-section. Figure 20 shows the chute in horizontal condition, wherein chute 46 is mounted on an annular mounting element 55, which is rotatable about axis 56. This allows chute 46 to pivot from the horizontal position (Figure 20) to a sloping position (Figure 23). When chute 46 is placed in a sloping position and, in addition, set vibrating, a shrimp present in said chute will be moved downwards.

Figure 21 is a plan view of chute 46, showing a recess 57 in the lowermost portion of the chute.

Due to the vibration of chute 46, a shrimp present therein in will be positioned slightly off-centre, with its heavier body portion being positioned more in the centre than the lighter tail portion. This effect is enhanced by the presence of recess 57, as a result of which the shrimp's backside will face slightly downwards upon exiting chute 46, so that it can easily land with its backside downwards in a guide groove in a next chute.

## Claims

1. A device for peeling shrimps (22) or similar crustaceans, which device is provided with a supporting surface (1), against which a shrimp (22) can be clamped with its backside, i.e. shell, by two clamping elements (2) which engage the shrimp (22) on either side of its belly side, near the edge of the shell, and with means for engaging the tail portion and pulling it off, **characterized by** means (8, 12) which move the clamping elements (2) in such a manner that the shell is pulled open and allowed to spring back again before said tail portion is pulled off.

2. A method for peeling shrimps (22) or similar crustaceans, wherein a shrimp (22) is clamped against a supporting surface (1) with its backside, i.e. shell, by two clamping elements (2) which engage the shrimp (22) on either side of its belly side, near the edge of the shell, after which the tail portion of the shell is engaged and pulled off, **characterized in that** the shell is pulled open by the two clamping elements (2) and allowed to spring back again before said tail portion is pulled off.

## Patentansprüche

1. Vorrichtung zum Schälen von Krabben (22) oder von ähnlichen Krustentieren, wobei die Vorrichtung mit einer tragenden Oberfläche (1) versehen ist, gegen die eine Krabbe (22) mit ihrer Rückseite, d.h. Schale, durch zwei Spannelemente (2) gespannt werden kann, die die Krabbe (22) auf beiden Seiten ihrer Bauchseite in der Nähe des Rands der Schale erfassen, und mit einem Mittel zum Zusammenwirken mit dem Schwanzbereich und um diesen abzuziehen, **gekennzeichnet durch** ein Mittel (8, 12), das die Spannelemente (2) auf eine solche Weise bewegt, daß die Schale in einen offenen Zustand gezogen wird und die Möglichkeit erhält, wieder zurückzufedern, bevor der genannte Schwanzabschnitt abgezogen wird.

2. Verfahren zum Schälen von Krabben (22) oder von ähnlichen Krustentieren, wobei eine Krabbe (22) gegen eine tragende Oberfläche (1) mit ihrer Rückseite, d.h. ihrer Schale, gespannt wird, durch zwei Spannelemente (2), die die Krabbe (22) auf beiden Seiten ihrer Bauchseite erfassen, in der Nähe des Rands der Schale, wobei danach der Schwanzabschnitt der Schale erfaßt wird und abgezogen wird, **dadurch gekennzeichnet, daß** die Schale durch die zwei Spannelemente (2) in einen offenen Zustand gezogen wird und die Möglichkeit erhält, wieder zurückzufedern, bevor der genannte Schwanzabschnitt abgezogen wird.

## Revendications

1. Appareil destiné au pelage des crevettes (22) et des crustacés analogues, cet appareil comprenant une surface de support (1) contre laquelle une crevette (22) peut être serrée avec sa face arrière, c'est-à-dire sa coquille, par deux éléments de serrage (2) qui sont au contact de la crevette (22) de part et d'autre du côté de son ventre, près du bord de la coquille, et avec un dispositif de coopération avec la partie de queue et d'extraction de celle-ci, **caractérisé par** un dispositif (8, 12) qui déplace les éléments de serrage (2) de manière que la coquille soit tirée en position d'ouverture et puisse revenir élastiquement avant que la partie de queue ne soit retirée par arrachement.

2. Procédé destiné au pelage des crevettes (22) et crustacés analogues, selon lequel une crevette (22) est serrée contre une surface de support (1) avec sa face arrière, c'est-à-dire sa coquille, par deux éléments de serrage (2) qui sont au contact de la crevette (22) de part et d'autre du côté de son ventre, près du bord de la coquille, puis la partie de queue de la coquille est saisie et retirée par arrachement, **caractérisé en ce que** la coquille est tirée en position d'ouverture par les deux éléments de serrage (2) et laissée afin qu'elle revienne élastiquement avant que la partie de queue ne soit retirée par arrachement.
